# EUROPÄISCHE PATENTSCHRIFT

(11) **EP 1 067 648 B1**
(45) Veröffentlichungstag und Bekanntmachung des Hinweises auf die Patenterteilung: **04.01.2006**
(21) Anmeldenummer: 00113647.2
(22) Anmeldetag: 28.06.2000
(51) Int. Cl.: H02J 1/10

(54) **Gerät, insbesondere Fahrzeug**
Device, particularly a vehicle
Dispositif, particulier véhicule

(30) Priorität: 01.07.1999 US 346092
(43) Veröffentlichungstag der Anmeldung: 10.01.2001
(73) Patentinhaber: DEERE & COMPANY, Moline, Illinois 61265-8098 (US)
(72) Erfinder: Hough, Barry Michael, Beaver Dam, WI 53916 (US); Shoemaker, Jim Milton, Horicon, WI 53032 (US)
(74) Vertreter: Lau-Loskill, Philipp

(56) Entgegenhaltungen:
- FR-A- 2 715 696
- US-A- 3 942 027
- US-A- 4 095 663
- US-A- 5 838 136

## Beschreibung

Die Erfindung betrifft ein Fahrzeug gemäß dem Oberbegriff des Patentanspruchs 1.

Nutzfahrzeuge und ähnliche benutzerorientierte Geräte weisen üblicherweise ein elektrisches System mit einer Nennspannung von 12 V zum Starten, Betreiben und für zusätzliche Prozesse auf. Wenn eine Batterie des Geräts bzw. Fahrzeugs unter das zum Anlassen notwendige Niveau abfällt, wird ein Fremdanlaßvorgang unter Verwendung eines weiteren Fahrzeugs oder einer portablen Zusatzstromquelle angewandt, um eine ausreichende Anlaßspannung zur Verfügung zu stellen. In manchen Fällen weist die Zusatzstromquelle die gleiche Nennspannung wie das betriebsunfähige Fahrzeug auf, so daß eine direkte Batterieverbindung in einfacher Weise möglich ist. Die Zusatzstromquelle kann jedoch eine wesentlich höhere Spannung aufweisen als das betriebsunfähige Fahrzeug, wie dies beispielsweise der Fall ist, wenn ein Fahrzeug mit einem 12-V-System unter Militärfahrzeugen betrieben wird, welche üblicherweise 24-V-Systeme aufweisen. Wenn ein 12-V-System und dem 24-V-System mittels eines Überbrückungs- bzw. Fremdanlaßkabel zu lange verbunden sind, können Schäden an der Fahrzeugbatterie oder an anderen Fahrzeugbauteilen auftreten. Ein zu frühzeitiges Trennen des Kabels kann die entladene Batterie daran hindern, sich so ausreichend aufzuladen, daß der Antrieb erneut gestartet werden kann, wenn aus irgendwelchen Gründen kurz nach dem Fremdstart ein Abschalten erfolgt.

Die US-A-4,999,562 zeigt ein Fahrzeug mit einer Fremdstarteinrichtung, die sowohl einen Nennspannung von 12 V wie auch von 24 V zum Fremdstarten eines weiteren Fahrzeugs zur Verfügung stellen kann. Die Höhe der Spannung kann manuell entsprechend den Anforderungen des zu startenden Fahrzeugs ausgewählt werden.

Die gattungsgemäße US-A-3,942,027 zeigt eine Einrichtung, welche im Kofferraum eines ersten Fahrzeugs angeordnet ist, um zum Zwecke eines Fremdstarts mit einer Batterie eines weiteren Fahrzeugs verbunden zu werden, so daß ein Fremdstart sowohl über eine direkte, frontseitige Verbindung der jeweiligen Fahrzeugbatterien als auch heckseitig erfolgen kann.

Die GB-A-2 265 267 offenbart ein Gerät zum Aufladen einer Fahrzeugbatterie mittels einer externen Stromquelle über einen Spannungs-/Stromstärkeregler.

Das der Erfindung zugrunde liegende Problem wird darin gesehen, daß ein Fremdstarten bekannter Fahrzeuge aufwendig ist und zu Beschädigungen der Fahrzeuge führen kann.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird sichergestellt, daß es zu keinem Überladen der Stromquelle bzw. einer Beschädigung des Geräts oder einer seiner Bauteile durch ein unbeabsichtigtes, zu langes Verbinden der Stromquelle und der Zusatzstromquelle kommt. Bei dem Gerät kann es sich beispielsweise um ein industrielles, bauwirtschaftliches oder landwirtschaftliches Arbeitsgerät handeln, vorzugsweise ist es aber als ein Fahrzeug ausgebildet, wobei es sich beispielsweise um ein Transportfahrzeug für Personen und/oder Lasten aber auch um ein Gerät zur Rasen-, Garten- bzw. Grundstückspflege oder um eine vorzugsweise selbstfahrende landwirtschaftliche bzw. industrielle oder bauwirtschaftliche Arbeitsmaschinen, wie einen Traktor oder eine Erntemaschine handeln kann. Weist die Zusatzstromquelle eine höhere Nennspannung als die Stromquelle auf, so kann durch die erfindungsgemäße Ausführung des Geräts einem Überladen der Stromquelle bzw. einer Beschädigung anderer Bauteile durch ein zu langes Einwirken einer hohen Spannung entgegengewirkt bzw. vorgebeugt werden. Es ist auf diese Weise möglich, ein Gerät mit einer Nennspannung, die unterhalb der Nennspannung der Fahrzeuge bzw. Maschinen, in deren Umgebung das Gerät eingesetzt wird, liegt, durch diese anderen Fahrzeuge bzw. Maschinen fremdstarten zu können, ohne daß Beschädigungen zu erwarten sind bzw. aufwendige Überbrückungseinrichtungen an diesen anderen Fahrzeugen vorgesehen werden müssen, beispielsweise um die für den Fremdstartvorgang eingesetzte Spannung zu reduzieren. Bei solchen Fahrzeugen bzw. Maschinen kann es sich um übliche Fahrzeuge aber auch um Sonderfahrzeuge, wie beispielsweise um Militärfahrzeuge, handeln, die häufig mit einer höheren Nennspannung betrieben werden. Es ist denkbar, daß eine direkte Verbindung der Stromquelle und der Zusatzstromquelle erfolgt, beispielsweise indem ein Überbrückerkabel an Kontakte der Stromquelle bzw. der Zusatzstromquelle angeklemmt wird. Die Einrichtung weist eine Anschlußeinrichtung beispielsweise in der Art eines Anschlusses bzw. in der Art einer Anschluß- bzw. Steckdose, auf, die mit einer weiteren Anschlußeinrichtung zusammenwirken kann, die beispielsweise in der Art eines Anschlusses bzw. eines Steckers ausgeführt sein kann. Diese zweite Anschlußeinrichtung kann beispielsweise ein Bestandteil eines Überbrücker- bzw. Fremdstartkabels oder auch mit einem solchen verbindbar sein. An dem Fahrzeug ist ein Mikrocontroller vorgesehen, der zumindest den zweiten Schalter ansteuert. Dies erfolgt derart, daß der Spannungszustand der Stromquelle ermittelt wird, wodurch der Mikrocontroller ein Schließen bzw. ein Öffnen des zweiten Schalters herbeiführt bzw. ein solches ermöglicht. Der Spannungszustand der Stromquelle wird ermittelt, indem eine Zeitdauer ermittelt wird, die ein mit der Spannungsquelle verbundener Kondensator benötigt, um eine vorgegebene Grenzspannung zu erreichen.

Die Anschlusseinrichtung ist mit der Zusatzstromquelle vorzugsweise über ein Kabel verbindbar.

Bei der Zusatzstromquelle kann es sich allgemein um einen Netzanschluß oder um eine portable bzw. mobile Stromquelle, wie eine Batterie oder einen Generator handeln. Vorzugsweise wird sie aber durch ein weiteres Fahrzeug bzw. durch einen Bauteil dieses Fahrzeugs, bei dem es sich wiederum um einen Generator oder in einfacher Weise um eine oder die Fahrzeugbatterie handeln kann, gebildet.

Es ist denkbar, sowohl den ersten als auch den zweiten Schalter automatisch anzusteuern, vorzugsweise wird aber zumindest einer der Schalter manuell betätigt, so daß der Anlaß- bzw. der Überbrückungsvorgang durch eine Bedienungsperson aktiv beeinflußt werden kann.

Sind beide Schalter manuell zu bedienen, so kann der Überbrückungs- und Anlaßvorgang vollständig durch eine Bedienungsperson gesteuert werden, wodurch weitere, möglicherweise aufwendige Baugruppen vermieden werden. Um sicherzustellen, daß die Schalter nicht versehentlich bzw. in unaufmerksamer Weise betätigt werden, sind diese vorzugsweise an einem Armaturenbrett des Geräts bzw. des Fahrzeugs vorgesehen, wobei es günstig ist, diese beabstandet und eventuell darüber hinaus auf gegebenüberliegenden Seiten einer Lenkeinrichtung, wie eines Lenkrades oder eine Lenkhebels etc., anzuordnen, so daß eine Bedienungsperson die Schalter aktiv betätigen muß.

Die Schalter können direkt in dem Zündkreis bzw. einem anderen Stromkreis vorgesehen sein oder aber ein Relais aufweisen bzw. ein solches umfassen bzw. ansteuern, so daß der Zündkreis bzw. der weitere Stromkreis über das Relais geschlossen bzw. geöffnet und damit angesteuert werden kann.

Öffnet bzw. schließt der zweite Schalter in Abhängigkeit von dem Spannungszustand der Stromquelle bzw. wird er in Abhängigkeit davon geöffnet bzw. geschlossen, so kann ein Fremdstarten des Geräts/Fahrzeugs bzw. ein Verbinden des Geräts/Fahrzeugs mit einer Zusatzstromquelle, beispielsweise um diese Aufzuladen bzw. ein weiteres Fahrzeug fremdzustarten zu können, davon abhängig gemacht werden, ob die Stromquelle betriebsbereit bzw. nicht betriebsbereit ist, wobei dies anhand der an der Stromquelle anliegenden Spannung ermittelt werden kann.

Darüber hinaus kann vorgesehen sein, daß der Mikrocontroller den Schalter in Abhängigkeit von einem Schaltzustand des Anlassers beeinflußt. Dies kann beispielsweise derart erfolgen, daß der Schalter schließt, wenn der Starter aktiviert wird, so daß zum Anlassen des Geräts eine Anlaßspannung zur Verfügung gestellt wird.

In der Zeichnung sind zwei nachfolgend näher beschriebene Ausführungsbeispiele der Erfindung dargestellt. Es zeigt:
- Fig. 1: eine Ansicht eines Fahrzeugs von oben, an dem eine erfindungsgemäße Fremdanlaßeinrichtung eingesetzt werden kann,
- Fig. 2: einen schematischen Schaltplan für eine erste Fremdanlaßeinrichtung,
- Fig. 3: einen Schaltplan für eine zweite Fremdanlaßeinrichtung und
- Fig. 4: eine rückwärtige Ansicht des Fahrzeugs aus Fig. 1 mit einem Fremdanlaßkabel.

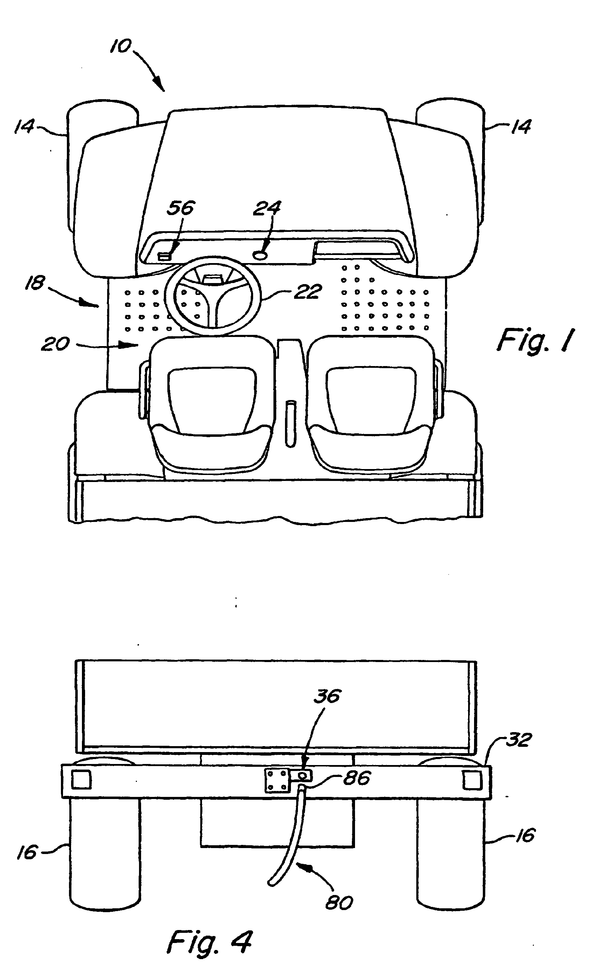

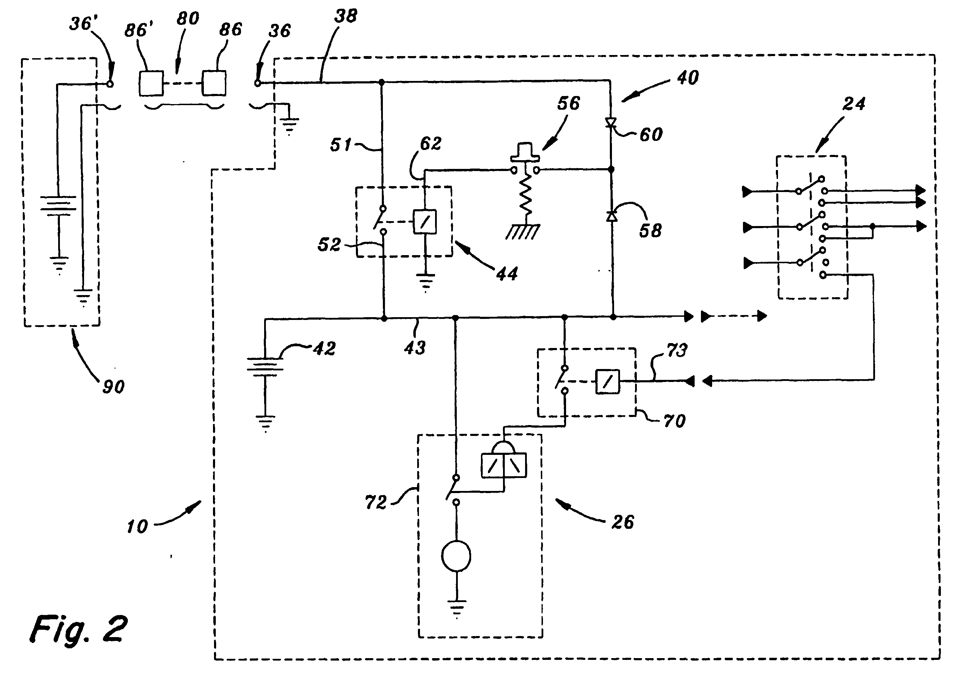

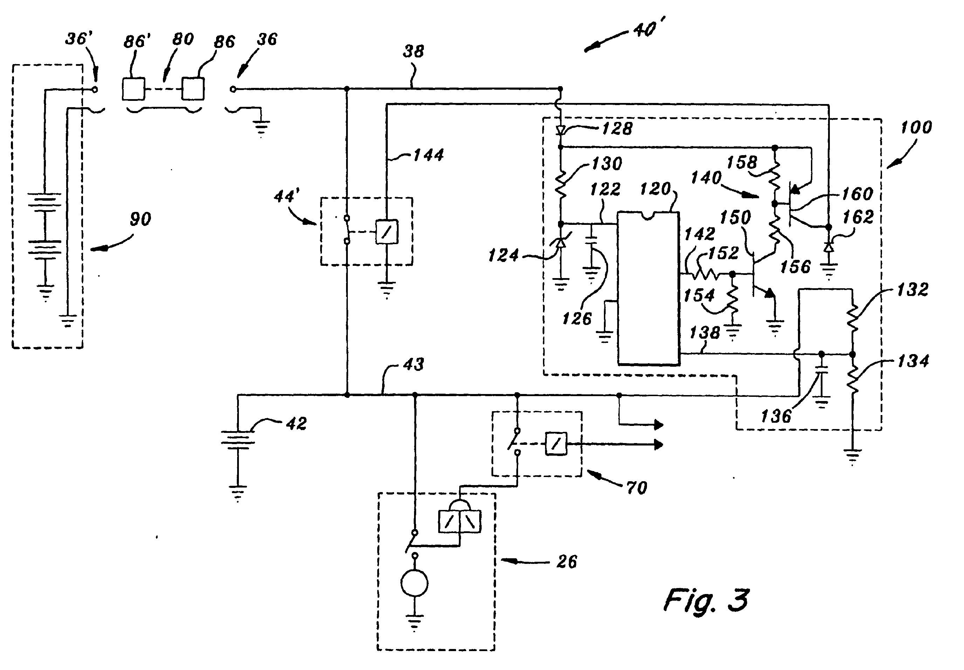

Es wird nun auf Figur 1 bezug genommen, in der ein Fahrzeug 10 mit einem Rahmen 12 gezeigt wird, der zur Bewegung über den Untergrund durch zwei vordere, lenkbare Räder 14 und rückwärtige, antreibbare Räder 16 abgestützt wird. Eine Bedienerplattform, die allgemein bei 18 gezeigt wird, mit einer Bedienersitzzone 20 ist an dem Fahrzeug 10 vorgesehen und weist übliche Bedienungselemente wie eine Lenkeinrichtung 22, die wirksam mit den Rädern 14 verbunden ist, und eine Instrumententafel mit einem Schalter bzw. einem Anlasserschalter 24 auf, welcher mit einem Antriebsanlaßkreis bzw. einem Zündkreis 26, der allgemein in den Figuren 2 und 3 mit 26 bezeichnet wird, verbunden ist. Das Fahrzeug 10, wie es in Figur 1 dargestellt ist, umfaßt eine rückwärtige Ladezone 28 hinter der Bedienersitzzone 20 und einen rückwärtigen Rahmenabschnitt 32 (Fig. 4) unterhalb der Ladezone 28.

Eine Fremdstartverbindung bzw. Anschlußeinrichtung 36 (Fig. 4) ist an dem rückwärtigen Rahmenabschnitt 32 vorgesehen und über eine Leitung 38 und einem Fremdanlaßkreis 40 (Fig. 2) mit dem Zündkreis 26 verbunden. Der Fremdanlaßkreis 40 weist eine Fahrzeugbatterie bzw. eine Stromquelle 42 auf, welche über eine Leitung 43 mit einem Relais 44 verbunden ist, welches durch den Fremdanlaßkreis 40 gesteuert wird. Das Relais 44 ist normalerweise geöffnet und weist ein erstes Schaltterminal 51 auf, welches mit der Leitung 38, und ein zweites Schaltterminal 52 auf, welches mit dem positiven Ausgang der Batterie 42 verbunden ist. Wie es in Figur 2 gezeigt wird, weist der Fremdanlaßkreis 40 einen normalerweise geöffneten Bedienungsschalter bzw. zweiten Schalter 56 auf, welcher in der Bedienerplattform 18 an der Instrumententafel auf der Seite der Lenkeinrichtung 22 vorgesehen ist, die dem Anlasserschalter bzw. dem Schalter 24 gegenüber liegt. Der Eingang des zweiten Schalters 56 ist über eine Diode 58 mit dem positiven Ausgang der Batterie 42 und über eine Diode 60 mit der Leitung 38 verbunden. Der Ausgang des zweiten Schalters 56 ist mit einem Steuerterminal 62 des Relais 44 verbunden. Wenn der zweite Schalter 56 gedrückt und durch eine Bedienungsperson gehalten wird, wird das Relais 44 aktiviert sein, um den Kreis zwischen der Leitung 38 und der Stromquelle 42 und dem Zündkreis 26 zu schließen, wenn Spannung zu dem Eingang des zweiten Schalters 56 entweder von der Batterie 42 oder einer separaten Spannungsquelle über die Anschlußeinrichtung 36 und die Leitung 38 geliefert wird.

Der Zündkreis 26 weist ein Anlaßrelais 70 auf, welches mit einem üblichen Anlasser 72 an dem Fahrzeug 10 verbunden ist. Das Anlaßrelais 70 weist einen Steueranschluß 73 auf, welcher mit dem Schalter 24 auf der Instrumententafel verbunden ist. Ein Bewegen des Schalters 24 in die unterste Startstellung schließt den Kreis zwischen der Leitung 43- und dem Steueranschluß 73, um das Anlaßrelais 70 zu schließen und den Anlasser 72 von der Leitung 43 aus zu versorgen.

Wie es in Figur 2 gezeigt wird, weist ein verlängertes Fremdanlaßkabel 80 einen ersten Anschluß bzw. eine Anschlußeinrichtung 86 auf, welcher daran angepaßt ist, mit der Anschlußeinrichtung 36 des Fahrzeugs 10 zusammenzuwirken. Das gegenüberliegende Ende des Fremdanlaßkabels 80 weist eine im wesentlichen identische Anschlußeinrichtung 86' auf, welche an eine Verbindung mit einer Anschlußeinrichtung 36' an einer alternativen Stromquelle bzw. einer Zusatzstromquelle, die allgemein bei 90 gezeigt wird, angepaßt ist.

Die Zusatzstromquelle 90 könnte ein weiteres Fahrzeug, das im wesentlichen mit dem Fahrzeug 10 identisch ist, mit identischer Betriebsspannung, Anschlußeinrichtung 36 und Fremdanlaßkreis 40 sein. Beispielsweise kann, wenn zwei im wesentlichen identische Nutzfahrzeuge mit einem System mit einer Nominalspannung von 12 V mit dem oben beschriebenen System in dem gleichen Gebiet arbeiten und eines dieser Fahrzeuge eine entladene Batterie aufweist, das sich in Betrieb befindliche Fahrzeug einfach neben dem betriebsunfähigen Fahrzeug positioniert und das Fremdanlaßkabel 80 mit den Anschlußeinrichtungen 36 und 36' verbunden werden. Beide Bedienungspersonen drücken dann ihren entsprechenden zweiten Schalter 56, um eine Verbindung zwischen der guten Stromquelle bzw. der Zusatzstromquelle 90 und der entladenen Batterie bzw. der Stromquelle 42 herzustellen, um schnell eine Oberflächenladung an der entladenen Batterie zu bewirken. Die Bedienungsperson des nicht betriebsfähigen Fahrzeugs 10 kann auch den Anlasser 72 des Fahrzeugs 10 betätigen, indem sie den Schalter 24 und den zweiten Schalter 56 gleichzeitig betätigt, während die andere Bedienungsperson nur den anderen zweiten Schalter 56 betätigt. Ist das betriebsunfähige Fahrzeug aufgeladen oder gestartet, indem das Fremdanlaßsystem verwendet wurde, geben die Bedienungspersonen die zweiten Schalter 56 frei und lösen das Fremdanlaßkabel 80 von den Fahrzeugen.

Die Zusatzstromquelle 90 kann auch ein anderes Fahrzeug oder ein Generator mit einem elektrischen System mit einer höheren Ausgabespannung als der des Fahrzeugs 10 sein. Das Fremdanlaßkabel 80 der Stromquelle 90 ist mit der Anschlußeinrichtung 36 verbunden, um die Leitung 38 mit einer verhältnismäßig hohen Spannung zu beaufschlagen. Die Bedienungsperson drückt den zweiten Schalter 56 an dem Fahrzeug 10, um das Relais 44 zu schließen und um die Stromquelle 90 mit der entladenen oder betriebsunfähigen Stromquelle 42 über die Leitung 43 zu verbinden. Durch ein Geschlossenhalten des zweiten Schalters 56 kann die Stromquelle 42 durch die Stromquelle hoher Spannung bzw. die Zusatzstromquelle 90 aufgeladen werden. Da die Bedienungsperson den zweiten Schalter 56 zum Aufladen gedrückt halten muß, wird die Möglichkeit einer Beschädigung verursacht durch ein Überladen wesentlich reduziert. Wenn die Bedienungsperson wünscht, das Fahrzeug 10 durch die Zusatzstromquelle 90 hoher Spannung zu starten, muß sie den Anlasserschalter bzw. Schalter 24 und den zweiten Schalter 56 gleichzeitig betätigen. Da eine positive Aktion in Form einer gleichzeitigen Bedienung der beabstandeten Schalter, des Schalters 24 und des zweiten Schalters 56 auf Seiten der Bedienungsperson durch beide Hände erforderlich ist, besteht eine geringere Wahrscheinlichkeit einer Beschädigung verursacht durch ein versehentliches zu langes Betreiben des Anlassers 72 durch die Zusatzstromquelle 90 hoher Spannung.

In der alternativen Ausführungsform aus Fig. 3 weist der Fremdanlaßkreis 40' ein normalerweise geschlossenes Relais oder einen zweiten Schalter 44' auf, der an dem Fahrzeug 10 angeordnet und mit einer Fremdanlaßsteuerung 100 verbunden ist, die ebenfalls an dem Fahrzeug 10 vorgesehen ist. Die Fremdanlaßsteuerung 100 erkennt die Spannung der Batterie 42, die Ladefähigkeit der Stromquelle 42, die Zeitdauer seit der Ladespannung angelegt worden ist, die Häufigkeit des Schließens des zweiten Schalters 44', und ob oder ob nicht ein Starten des Fahrzeugs 10 versucht wurde. Basierend auf den aufgenommenen Bedingungen öffnet die Fremdanlaßsteuerung 100 den zweiten Schalter 44', um ein Überladen und Beschädigen des elektrischen Systems des Fahrzeugs 10 zu verhindern. Da der zweite Schalter 44' normalerweise geschlossen ist, ist eine Verwendung des Fahrzeugs 10 für einen Fremdstart oder um einen Batteriespannungsstoß für ein anderes Fahrzeug zu liefern ermöglicht Die Bedienungsperson schließt einfach ein Fremdanlaßkabel 80 an die Anschlußeinrichtung 36 an und verbindet das Fremdanlaßkabel 80 mit dem elektrischen System des betriebsunfähigen Fahrzeugs bzw. der Zusatzstromquelle 90.

Der Fremdanlaßkreis 40' weist einen Mikrocontroller 120 auf, der durch einen Anschluß 122 beaufschlagt wird, der mit einer gesteuerten Spannungsquelle, die eine Zenerdiode 124 und einen Kondensator 126 aufweist, verbunden ist. Eine Diode 128 zum Schutz vor einer umgekehrten Polarität und ein Spannungsbegrenzungswiderstand 130 verbinden den Anschluß 122 mit der Leitung 38. Die Zenerdiode 124 begrenzt die Spannung an dem Anschluß 122 auf ungefähr 5 V (Vcc). Ein Spannungsteiler weist Widerstände 132 und 134 auf und ein Kondensator 136 ist mit einem Sensoranschluß 138 des Mikrocontrollers 120 und mit der Leitung 43 verbunden, um ein Signal an den Mikrocontroller 120 zu liefern, das das Spannungsniveau an der Batterie 42 anzeigt.

Ein Relaistreiber 140 ist mit einem Ausgang 142 und mit einem Steuereingang 144 des Relais 44' verbunden. Der Relaistreiber 140 weist einen NPN Transistor 150 mit einem geerdeten Emitter und einer Basis auf, die über einen Widerstand 152 mit dem Sensoranschluß 142 und über einen Widerstand 154 mit Masse verbunden sind. Der Kollektor des Transistors 150 ist über Widerstände 156 und 158 mit der Leitung 38 über die Diode 128 verbunden. Ein PNP Transistor 160 weist einen Kollektor auf, der über eine Diode 162 mit Masse und mit einem Steuereingang 144 verbunden ist. Der Emitter ist über die Diode 128 mit der Leitung 38 verbunden.

Ausgewählte Anschlüsse des Mikrocontrollers 120 können entweder als ein Eingang oder ein Ausgang konfiguriert sein. Der Sensoranschluß 138 ist zuerst als ein Ausgang konfiguriert und geerdet, um den Kondensator 136 vollständig zu entladen. Danach ist der Sensoranschluß 138 als ein Eingang konfiguriert, was es dem Kondensator 136 erlaubt, ein Aufladen zu beginnen. Die Laderate wird durch die Spannung an der Batterie 42 bestimmt. Der Mikrocontroller 120 überwacht die Zeit, die benötigt wird, um den Kondensator 136 auf eine Grenzspannung aufzuladen, welche vorzugsweise die Hälfte von Vcc oder ungefähr 2,5 V beträgt. Basierend auf der Dauer zum Erreichen der Grenzspannung berechnet der Mikrocontroller 120 die an die Widerstand-Kondensator Kreis 132, 134 und 136 angelegte Spannung. Diese Ablauffolge wird dann wiederholt, wobei der Mikrocontroller 120 den Sensoranschluß 138 als einen Ausgang konfiguriert, der den Sensoranschluß 138 erdet und den Kondensator 136 entlädt. Diese Methode einer Spannungsbestimmung ermöglicht die Verwendung eines preisgünstigen Mikrocontrollers ohne analoge oder digitale Wandler.

Wenn die Dauer, die zum Aufladen des Kondensators 136 auf den Grenzwert ein Spannungsniveau einer aufgeladenen Batterie anzeigt, wechselt der Mikrocontroller 120 den Ausgang 142 von einem niedrigen zu einem hohen oder aktivierten Zustand welcher die Transistoren 150 und 160 und den Schalter 44' aktiviert, um den Kreis zwischen der alternativen Spannungsquelle 90 und der Batterie 42 zu öffnen. Auf diese Weise wird ein Überspannungsschutz zur Verfügung gestellt.

Wenn die Spannung an der Batterie bzw. der Stromquelle 42 abfällt, beispielsweise, wenn der Anlasserschalter 26 betätigt ist, setzt der Mikrocontroller 120 den Ausgang 142 niedrig, um die Transistoren 150 und 160 abzuschalten und um das Relais 44' zu schließen, um eine Batterieladung und/oder einen Anlaßspannungsstoß zu liefern. Die Anzahl der Male, in denen der Schalter 44' getaktet wurde, und die Zeitsteuerung der Takte wird durch den Mikrocontroller 120 überwacht, um eine Anzeige des Ladezustand der Stromquelle 42, die Zeitdauer, in der der Anlasser aktiviert wurde, und die Anzahl von Anlasserbetätigungstakten, mit der alternativen Spannungsquelle 90, zu liefern. Ein separater Anschluß des Mikrocontrollers 120 kann auch mit dem Eingang des Anlasserschalters 24 verbunden sein, um die tatsächliche Anlasserladezeit zu überwachen. Wenn die Ladezeit zu lang ist oder wenn eine hohe Anzahl von Ladeanlaßtakten in einer vorgeben Zeitdauer ermittelt werden, wird der Mikrocontroller den Schalter 44' öffnen. Eine schnelle Relaistaktung kann anzeigen, daß die Stromquelle 42 defekt ist.

Nur beispielhaft wurden die folgenden Bauteile als Grundlage einer guten Systemoperation ermittelt.

| Bauteil: | Bezugszeichen | Wert |
|---|---|---|
| Widerstände | 130 und 156 | 1,2 kΩ |
| | 132 und 134 | 10 kΩ |
| | 152 und 154 | 10 kΩ |
| | 158 | 10 kΩ |
| Kondensatoren | 126 | 47 µF |
| | 136 | 0,1 µF |
| Mikrocontroller | 120 | PIC12C508 |

Entsprechend der Beschreibung der bevorzugten Ausführungsform, wird es deutlich werden, daß mannigfaltige Modifikationen vorgenommen werden können, ohne von dem Erfindungsgedanken, wie er durch die beiliegenden Ansprüche definiert wird, abzuweichen.

## Patentansprüche

1. Fahrzeug (10), mit einem Anlasser (72), einer Stromquelle (42) und einem Schalter (24), über den der Anlasser (72) mit der Stromquelle (42) verbindbar ist, und einer Einrichtung zum Verbinden mit einer Zusatzstromquelle (90), mit einem zweiten Schalter (56), durch den die Verbindung zwischen der Einrichtung und der Stromquelle (42) und/oder dem Anlasser (72) unterbrochen werden kann und zumindest einer Anschlußeinrichtung (36), die mit einer zweiten, entsprechend ausgebildeten Anschlußeinrichtung (86, 86') selektiv zusammenwirken kann, die mit der Zusatzstromquelle (90) verbindbar ist, **dadurch gekennzeichnet, daß** der zweite Schalter (56) mittels eines Mikrocontrollers angesteuert wird, der den Spannungszustand der Stromquelle (42) basierend auf der Dauer, die ein mit der Stromquelle (42) verbundener Kondensator (136) benötigt, um eine vorgegebene Grenzspannung zu erreichen, ermittelt.

2. Fahrzeug nach Anspruch 1, **dadurch gekennzeichnet, daß** die Anschlusseinrichtung (86, 86') mit der Zusatzstromquelle (90) über ein Kabel (80) verbindbar ist.

3. Fahrzeug nach Anspruch 1 oder 2, **dadurch gekennzeichnet, daß** die Zusatzstromquelle (90) von einem zweiten Fahrzeug bzw. einem an diesem angeordneten Bauteil, beispielsweise einer Fahrzeugbatterie, oder einer portablen bzw. mobilen Zusatzstromquelle bereitgestellt wird.

4. Fahrzeug nach einem oder mehreren der vorherigen Ansprüche, **dadurch gekennzeichnet, daß** wenigstens einer der Schalter (24, 56) manuell betätigbar ist.

5. Fahrzeug nach Anspruch 4, **dadurch gekennzeichnet, daß** beide Schalter (24, 56) manuell betätigbar sind.

6. Fahrzeug nach Anspruch 5, **dadurch gekennzeichnet, daß** die beiden Schalter (24, 26) an einem Armaturenbrett des Fahrzeugs (10) derart beabstandet vorgesehen sind, daß zwischen ihnen ein weiteres Bedienungselement vorgesehen ist.

7. Fahrzeug nach Anspruch 6, **dadurch gekennzeichnet, daß** das Bedienungselement in Form einer Lenkeinrichtung (22) ausgebildet ist.

8. Fahrzeug nach einem oder mehreren der vorherigen Ansprüche, **dadurch gekennzeichnet, daß** wenigstens einer der Schalter (24, 56) ein Relais (44, 44') aufweist bzw. als solches ausgebildet ist.

9. Fahrzeug nach einem oder mehreren der vorherigen Ansprüche, **dadurch gekennzeichnet, daß** zumindest der zweite Schalter (56) in Abhängigkeit von dem Spannungszustand der Stromquelle (42) öffnet bzw. schließt.

10. Fahrzeug nach einem oder mehreren der vorherigen Ansprüche, **dadurch gekennzeichnet, daß** der Mikrocontroller (120) den zweiten Schalter (56) in Abhängigkeit vom Schaltzustand des Anlassers (72) schließt.

11. Fahrzeug nach Anspruch 10, **dadurch gekennzeichnet, daß** der Mikrocontroller (120) den zweiten Schalter (56) derart ansteuert, daß er den Schalter (56) schließt, wenn der Anlasser (72) aktiviert wird.

## Claims

1. Vehicle (10), with a starter (72), a power source (42) and a switch (24), via which the starter (72) can be connected to the power source (42), and a means for connecting to an additional power source (90), with a second switch (56), through which the connection between the means and the power source (42) and/or the starter (72) can be interrupted, and at least one connector (36), which can selectively cooperate with a second appropriately configured connector (86, 86'), which can be connected to the additional power source (90), **characterised in that** the second switch (56) is actuated by means of a microcontroller, which determines the voltage status of the power source (42) based on the period, which a capacitor (136) connected to the power source (42) requires to reach a given limit voltage.

2. Vehicle according to Claim 1, **characterised in that** the connector (86, 86') can be connected to the additional power source (90) via a cable (80).

3. Vehicle according to Claim 1 or 2, **characterised in that** the additional power source (90) is provided by a second vehicle or a component arranged on this, e.g. a vehicle battery, or a portable or mobile additional power source.

4. Vehicle according to one or more of the preceding claims, **characterised in that** at least one of the switches (24, 56) can be operated manually.

5. Vehicle according to Claim 4, **characterised in that** both switches (24, 56) can be operated manually.

6. Vehicle according to Claim 5, **characterised in that** the two switches (24, 56) are provided on an instrument panel of the vehicle (10) at such a distance from one another that a further control element is provided between them.

7. Vehicle according to Claim 6, **characterised in that** the control element is configured in the form of a steering mechanism (22).

8. Vehicle according to one or more of the preceding claims, **characterised in that** at least one of the switches (24, 56) has a relay (44, 44') or is configured as such.

9. Vehicle according to one or more of the preceding claims, **characterised in that** at least the second switch (56) opens or closes as a function of the voltage status of the power source (42).

10. Vehicle according to one or more of the preceding claims, **characterised in that** the microcontroller (120) closes the second switch (56) as a function of the switching status of the starter (72).

11. Vehicle according to Claim 10, **characterised in that** the microcontroller (120) actuates the second switch (56) so that it closes the switch (56) when the starter (72) is activated.

## Revendications

1. Véhicule (10) comportant un démarreur (72), une source de courant (42) et un contacteur (24), par l'intermédiaire duquel le démarreur (72) peut être relié à la source de courant (42), et un dispositif pour la liaison avec une source de courant supplémentaire (90), comportant un deuxième contacteur (56), qui permet d'interrompre la liaison entre le dispositif et la source de courant (42) et/ou le démarreur (72), et au moins un dispositif de branchement (36) qui peut coopérer de manière sélective avec un deuxième dispositif de branchement (86, 86'), qui est conçu de manière correspondante et qui peut être relié à la source de courant supplémentaire (90), **caractérisé en ce que** le deuxième contacteur (56) est activé au moyen d'un microcontrôleur, qui détermine l'état de tension de la source de courant (42) en se basant sur le temps nécessaire à un condensateur (136), relié à la source de courant (42), pour atteindre une tension limite prédéfinie.

2. Véhicule selon la revendication 1, **caractérisé en ce que** le dispositif de branchement (86, 86') peut être relié à la source de courant supplémentaire (90) via un câble (80).

3. Véhicule selon la revendication 1 ou 2, **caractérisé en ce que** la source de courant supplémentaire (90) est mise à disposition par un deuxième véhicule ou un composant agencé dans celui-ci, tel qu'une batterie de véhicule, ou par une source de courant supplémentaire portable ou mobile.

4. Véhicule selon une ou plusieurs des revendications précédentes, **caractérisé en ce qu'**au moins l'un des contacteurs (24, 56) peut être manoeuvré manuellement.

5. Véhicule selon la revendication 4, **caractérisé en ce que** les deux contacteurs (24, 56) peuvent être manoeuvrés manuellement.

6. Véhicule selon la revendication 5, **caractérisé en ce que** les deux contacteurs (24, 56) sont prévus sur un tableau de bord du véhicule (10) en étant écartés l'un de l'autre de telle sorte qu'un autre élément de commande est prévu entre eux.

7. Véhicule selon la revendication 6, **caractérisé en ce que** l'élément de commande est réalisé sous la forme d'un dispositif de direction (22).

8. Véhicule selon une ou plusieurs des revendications précédentes, **caractérisé en ce qu'**au moins l'un des contacteurs (24, 56) comporte un relais (44, 44') ou est conçu sous la forme d'un tel relais.

9. Véhicule selon une ou plusieurs des revendications précédentes, **caractérisé en ce qu'**au moins le deuxième contacteur (56) ouvre ou ferme en fonction de l'état de tension de la source de courant (42).

10. Véhicule selon une ou plusieurs des revendications précédentes, **caractérisé en ce que** le microcontrôleur (120) ferme le deuxième contacteur (56) en fonction de l'état de commutation du démarreur (72).

11. Véhicule selon la revendication 10, **caractérisé en ce que** le microcontrôleur (120) commande le deuxième contacteur (56) de manière à fermer le contacteur (56) lorsque le démarreur (72) est activé.
